(19) **Europäisches Patentamt / European Patent Office / Office européen des brevets**

(11) **EP 1 575 297 B1**

(12) **EUROPEAN PATENT SPECIFICATION**

(45) Date of publication and mention
of the grant of the patent:
**20.06.2012 Bulletin 2012/25**

(51) Int Cl.:
*H04N 7/26* (2006.01)

(21) Application number: **04100993.7**

(22) Date of filing: **11.03.2004**

(54) **Method and apparatus for edge-based image encoding and decoding**

Verfahren und Vorrichtung zur Kanten-basierten Bildcodierung und -decodierung

Procédé et appareil pour le codage et le décodage d'image basé sur les bords

(84) Designated Contracting States:
**AT BE BG CH CY CZ DE DK EE ES FI FR GB GR HU IE IT LI LU MC NL PL PT RO SE SI SK TR**

(43) Date of publication of application:
**14.09.2005 Bulletin 2005/37**

(73) Proprietor: **Istituto Superiore Mario Boella sulle Tecnologie dell'Informazione e delle Telecomunicazioni 10138 Torino (IT)**

(72) Inventors:
• **Scopigno, Riccardo 15060, VIGNOLE BORBERA (IT)**
• **Belfiore, Stefano 10025, PINO TORINESE (IT)**

(74) Representative: **Camolese, Marco Metroconsult S.r.l. Via Sestriere 100 10060 None (TO) (IT)**

(56) References cited:
EP-A- 0 545 849    EP-A- 0 625 853
EP-A- 0 679 032    EP-A- 0 706 155
EP-A- 0 805 599    WO-A-99/25121
WO-A1-00/31964    US-A- 5 621 794

• FROMENT J: "Image Compression Through Level Lines and Wavelet Packets" IN WAVELETS IN SIGNAL AND IMAGE ANALYSIS, FROM THEORY TO PRACTICE, ARTHUR A. PETROSIAN AND FRANÇOIS G. MEYER, EDS., KLUWER ACAD. PUBL., 2001, pages 305-339, XP002306674 NETHERLANDS

• RATAKONDA K ET AL: "SEGMENTATION BASED REVERSIBLE IMAGE COMPRESSION" PROCEEDINGS OF THE INTERNATIONAL CONFERENCE ON IMAGE PROCESSING (ICIP) LAUSANNE, SEPT. 16 - 19, 1996, NEW YORK, IEEE, US, vol. VOL. 1, 16 September 1996 (1996-09-16), pages 81-84, XP000780602 ISBN: 0-7803-3259-8

• YAN J K ET AL: "ENCODING OF IMAGES BASED ON A TWO-COMPONENT SOURCE MODEL" IEEE TRANSACTIONS ON COMMUNICATIONS, IEEE INC. NEW YORK, US, vol. 25, no. 11, 1 November 1977 (1977-11-01), pages 1315-1322, XP000644936 ISSN: 0090-6778

• PENNEC LE E ET AL: "IMAGE COMPRESSION WITH GEOMETRICAL WAVELETS" PROCEEDINGS 2000 INTERNATIONAL CONFERENCE ON IMAGE PROCESSING. ICIP 2000. VANCOUVER, CANADA, SEPT. 10 - 13, 2000, INTERNATIONAL CONFERENCE ON IMAGE PROCESSING, NEW YORK, NY : IEEE, US, vol. VOL. 1 OF 3. CONF. 7, 10 September 2000 (2000-09-10), pages 661-664, XP001065407 ISBN: 0-7803-6298-5

• WAKIN M ET AL: "Image compression using an efficient edge cartoon + texture model" PROCEEDINGS DCC 2002. DATA COMPRESSION CONFERENCE, 02-04 APRIL 2002,SNOWBIRD, UT, USA, IEEE COMPUT. SOC, April 2002 (2002-04), pages 43-52, XP002306675 LOS ALAMITOS, CA, USA ISBN: 0-7695-1477-4

EP 1 575 297 B1

- TOSUN A S ET AL: "Efficient multi-layer coding and encryption of MPEG video streams" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, 30 July 2000 (2000-07-30), pages 119-122, XP010511416 ISBN: 0-7803-6536-4
- VAN OVERLOOP J ET AL: "Segmented image coding of palettized images" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 April 1997 (1997-04-21), pages 2937-2939, XP010225772 ISBN: 0-8186-7919-0
- FROMENT J: "A compact and multiscale image model based on level sets" SCALE-SPACE THEORIES IN COMPUTER VISION. SECOND INTERNATIONAL CONFERENCE, SCALE-SPACE '99. CORFU, GREECE, 26-27 SEPTEMBER 1999, PROCEEDINGS (LECTURE NOTES IN COMPUTER SCIENCE VOL.1682), September 1999 (1999-09), pages 152-163, XP002306676 SPRINGER-VERLAG BERLIN, GERMANY ISBN: 3-540-66498-X
- KAUP A: "Adaptive constrained least squares restoration for removal of blocking artifacts in low bit rate video coding" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 April 1997 (1997-04-21), pages 2913-2916, XP010225766 ISBN: 0-8186-7919-0
- GLENTIS G-O ET AL: "Efficient two-dimensional ARX modeling" PROCEEDINGS OF THE INTERNATIONAL CONFERENCE ON IMAGE PROCESSING (ICIP) AUSTIN, NOV. 13 - 16, 1994, LOS ALAMITOS, IEEE COMP. SOC. PRESS, US, vol. VOL. 3 CONF. 1, 13 November 1994 (1994-11-13), pages 605-609, XP010146242 ISBN: 0-8186-6952-7

## Description

The present invention relates to a method and apparatus for edge-based image and video encoding and decoding, especially for selective encryption application and flexible network services.

Video encoding is generally known since long as a way to handle images in order to obtain a digital compressed version of them. The first step, if needed, is the conversion of the analog video signal into a suitable digital image (still or moving). The second stage is compressing the digital video image, in order to reduce the amount of information needed to describe the visual content, through suitable actions like redundancy reduction, format adaptations, video encryption, so that it is possible to transmit and/or store it at a lower cost. Compression may be either lossless or lossy.

Currently existing compression techniques make extensive use of image transformation: in particular most used solutions (e.g. MPEG, H.264 for video, JPEG for image) use DCT transforms performed on fixed shape pixel blocks. These have several advantages but leads also to some limitations; for instance:

- they are not "natural" encoding approaches and do not perform well (in quality and occupancy) in some cases, such as: images with strong edges, synthetic images;
- they manage in the same way all high-frequency contributions (both real edges and texture elements);
- they tend to create artificial edges (artefacts) on the block boundaries: these can be only partially overcome using further processing steps (deblocking filters);
- they are not always efficient in performing "intra-frame" prediction (that is encoding of a block differentially with respect to contiguous blocks): this is not applicable when there are strong edges inside the block;
- they are not always efficient in performing motion estimation and compensation, in "inter-frame" prediction (that is encoding of a block differentially with respect to a previously transmitted frame): this does not perform well with images contours, since it works using fixed shape pixel blocks;
- they cannot easily support motion estimation and compensation based on edge information (which would improve limitations of the previous point): currently no edge information is encoded and can be used as reference for this kind of motion estimation;
- they are difficult to be encrypted in a standard way: several encryption algorithms have been proposed in order to secure compressed images and videos, especially in JPEG and MPEG format. Some of them ensure a high data security to the detriment of the processing time, encrypting the whole bitstream, while others apply various selective encryption techniques. Usually, those methods determine the portion of the bit-stream to be encrypted exploiting different stream parsers, depending on the components that have to be encrypted. Some algorithms ensure the bitstream security processing the most important data, such as the I-frames or I-Macroblocks in MPEG-like videos or the DC coefficients of DCT transform in JPEG framework, while some other algorithms encrypt the headers that precede the data, but most of these methods require a non standard decoder;

- they can be improved in order to efficiently be processed by a digital watermarking step (for SE - Selective Encryption): typically, most flexible solutions make use of a further step for recognition of perceptually most significant regions, that is, the ones which carry most of the visual information, typically shapes and edges, in order to more deeply watermark them;
- they are not suitable for a priori known perceptually satisfactory quality: you cannot know which is the grade of DCT compression to be used (that is the number of DCT components to be specified) in order to have a minimal description, sufficient for image recognition, unless you can see the final encoding result. This is due to strong dependency of the encoding result from the nature of the image, and in particular to the correlation between edges (and edge preservation) and high spatial frequencies.

So the state of the art for video encoding shows some critical lacks and margin of improvements in its performances, especially from the encryption (and SE) point of view: it still requires difficult operations, in terms of processing and memory capacity, at the current state of the art. Encryption is in fact a very resource consuming processing, which makes often use of computational complex operations, and becomes particularly critical especially if small and mobile devices and terminals are involved: it is important to limit it without compromising digital right management (DRM).

Therefore it is the main object of the present invention to solve the above mentioned problems and to provide a method and apparatus for edge-based image and video encoding and decoding, especially for selective encryption application and flexible network services, which encodes separately edge-based information, which, from above explanation, seems to be the most critical (for importance, need of resources and difficulty of encoding).

The basic idea of the present invention concerns decomposing images into the following basic "natural" components:

- edge position;
- grey-tone/luminance and/or colour sampling along the edges (separately or as a whole with the previous one);
- residuum "smooth" image encoded according to any image description/compression standard.

The document J. K. YAN ET AL., "ENCODING OF IMAGES BASED ON A TWO-COMPONENT SOURCE MODEL", IEEE TRANSACTIONS ON COMMUNICATIONS, IEEE INC., NEW YORK, US, vol. 25, no. 11, 1 November 1977, pages 1315-1322, ISSN: 0090-6778 provides a disclosure of the above mentioned decomposition.

The above procedure conceptually corresponds to the "human" method used to draw: the starting point consists of the shapes (edges) which are successively filled with colours.

The first step is needed to distinguish between areas with smooth transitions (strong spatial correlation) and areas with sharp edges (high spatial frequencies).

On the other side, this lets erasing hard colour transitions, which are difficult to be described by traditional image encoders (like the DCT-based ones): for this reason the second step consists of the colour samples along and inside the edge areas.

The first two steps give a rough view of the original image (by extrapolating and relaxing the colour information provided with the edges).

What is left is a low-content image which is, essentially, the difference between the image built by the first two steps and the original image (residuum). Therefore residuum must be further processed in order to be encoded by traditional image encoding method, for example DCT-based or Wavelet-based ones.

The invention is suitable for several applications, first of all for selective encryption SE, because most of the visual information is encoded separately in the edge, and this type of information is easier to be hidden, as it will be shown.

Video encoding must be also suitable for an efficient use of network resources (in particular in IP and in generalized packet network): the decomposition scheme that is proposed in the invention can also help efficient transmission through Network Adaptation Layer (NAL).

Therefore the method for edge-based image and video encoding and decoding, according to the invention improves the existing coding schemes in terms of easiness of encryption (Encr) and selective encryption (SE), support of flexible network adaptation layer (NAL), "perceptive" decomposition of the image into complementary and intrinsically different components.

The invention has moreover the advantage of being backward compatible and easily integrated in any (existing or future) encoding and decoding solution, as a pre-processing or post-processing block.

These and further objects are achieved by means of an apparatus and method as described in the attached claims, which are considered an integral part of the present description.

The invention will become fully clear from the following detailed description, given by way of a mere exemplifying and non limiting example, to be read with reference to the attached drawing figures, wherein:

Fig. 1 shows a block diagram of the encoder in accordance with the invention;
Fig. 2 shows a block diagram of the decoder in accordance with the invention;
Figures 3, 4, 5 and 6 show examples of implementation of the steps of edge area processing at the encoder;
Figures 7 and 8 show examples of implementation of the steps of row-by-row edge processing at the encoder;
Figure 9 shows an example of implementation of the step of row-by-row edge processing at the decoder;
Figures 10, 11 and 12 show examples of implementation of the step of edge propagation processing;
Figure 13 shows a diagram depicting a way how to handle the residuum transformation;
Figures from 14-0 to 14-7 show examples of encoding and decoding of a sample image obtained in the various steps of the method of the invention.

In the following the method for edge-based image and video encoding and decoding subject of the invention will be described with reference to the annexed drawings with a block by block description.

### Encoder

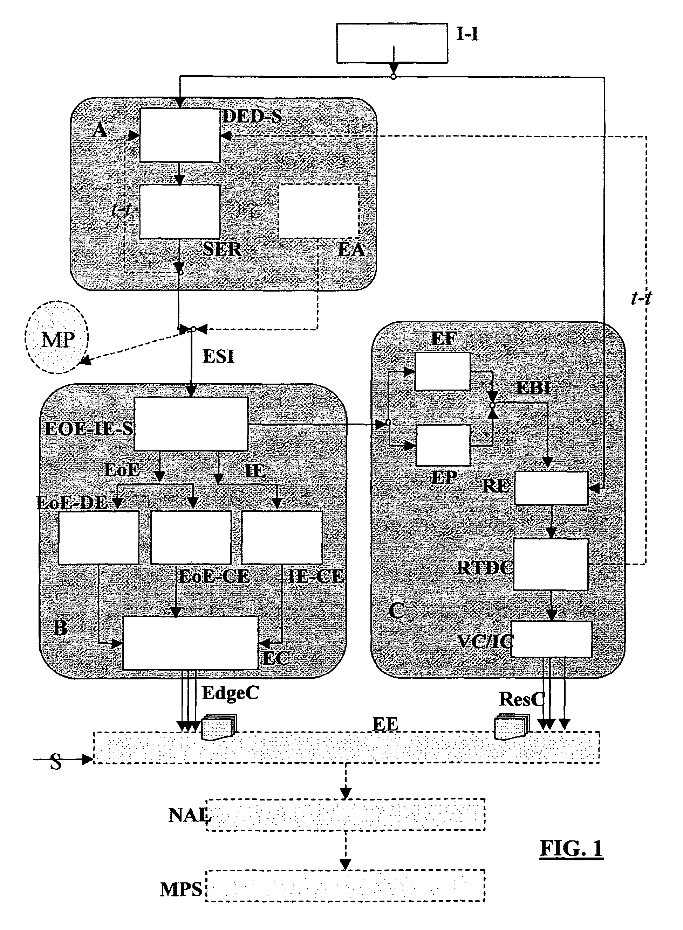

In fig. 1 a block-diagram of the video image encoder is shown, divided into main functional blocks. A general description is given below.

### Input

Any image format, uncompressed or decompressed, (or frame format, in case a video sequence is considered) is suitable for the proposed compression scheme. The format used in the non-limiting example described below is the well known YUV format, in which the colour image is decomposed into one luminance component (Y) and two chrominance components (U, V).

For simplicity the method will be presented with reference to an input image I-I with the following characteristics:

- still image;
- uncompressed digital format YUV;
- luminance is the only non-trivial component (we will refer to it as grey tone or color).

It will be separately explained how to apply and extend the invented techniques to the other possible cases.

Block A: Edge Detection

The basic idea of this block is not only to identify the edges but also to provide a "view of edges", which is:

- simple to be encoded in a "compressed way";
- able to take all high spatial frequency and do leave "smooth" images;
- able to identify the colours of the image on both sides of the edge.

So this block:

- takes an Input Image I-I;
- detects the edges, creating an edge set ES, a collection of the edge-points of the image;
- enlarges the ES, so both sides of any strong colour transition are kept into account;
- makes ES and its contour as regular as possible;
- may optionally add to the ES some points and lines (for instance to delete more details from the image or to interrupt large area without edge and prevent saturation in Block B);
- samples the I-I inside the ES, creating an edge-set image ESI, which is the final output of block A.

Block B: Edge Description

This block is meant to provide an encoding for the edge-set image ESI, so:

- it takes ESI as input;
- it generates one, or more, encoding bitstreams EdgeC which describe the edge and feed an optional Encryption Engine EE;
- it generates an additional output OB, derived from ESI refinement, for block C feeding: it can be ESI itself or ESI with an additional classification of ESI contour.

Several methods may be used for encoding ESI.

Traditional encoding methods don't work well with edge images: formats such as BMP, RAW and PGM require too many bits, while DCT-based methods worsen their performance on images such as ESI and similar (the number of strong transitions is about three times that of I-I); on the other hand formats such as JBIG and PBM cannot compress enough edge position information.

For this reason two alternative methods are provided:

- (**Ba**) the method explained in the detailed description below, namely separate coding of:

   1. edge location,
   2. lossless/lossy colour along the contour of the edge;

   3. colour inside the edge;

- (**Bb**) a hybrid encoding method using existing image encoding solutions: an image made up by edges and their smooth relaxation is built. For example, for this purpose, an edge-based image can be used, for instance the edge-based image EBI produced by block C, or (better) an image obtained in the same way but using edges before their filtering. Such images can be easily encoded with existing encoders (including DCT-based methods).

Since the second method (Bb) is derived from the first (Ba), it will not be explained more in details. In addition the first method has the advantage of generating codes easy to be encrypted (only some bits need to be encrypted) and seems to behave globally and take less bits. For this reason it is considered the preferred solution for Block B.

Block C: Residuum Description

This block is meant to provide the encoding of the visual information which cannot be extrapolated from the edge-set image ESI. For this purpose Block C:

- takes information OB on edge-set image ESI derived from block B and the original image I-I as inputs;
- extrapolates the information ESI and generates an Edge-Based Image EBI;
- generates Residuum RES as a sort of "correction" to the image that can be extrapolated by the only edges respect to the original image I-I;
- modifies RES so that it can be easily encoded;
- encodes this information, generating one (or more) encoding bitstream ResC which describes the residuum and feeds an optional Encryption Engine.

So, residuum has the main goal of providing a correction to edge-based image prediction. Here, again, two alternative methods can be used:

- (Ca) the method explained in the following: residuum is here defined as the difference between the original image I-I and the edge-based image EBI; this method applies to both methods Ba and Bb for ESI encoding described above;
- (Cb) a differential encoding method (applicable to only case Ba): this is again a hybrid method. While using extrapolating methods to the edge information what is encoded is the difference between it and the original image. So the original colours at that point can be virtually known also at the receiver and are used to predict next step.

This corresponds to a sort of derivative method that leads to very poor images which can be transformed according to below described residuum transformation methods and encoded with any image encoding technique.

Since method Cb seems to be less stable (any lossy encoding of residuum generated by Cb critically ruins the reconstruction) it is not described deeply.

Instead method Ca is considered the preferred one and will be described more in details.

In both cases (Ca and Cb), Residuum RES contains positive and negative values, very low in their "average" (quite close to zero): since the invention is meant to be compatible with any existing or future image-encoder it is necessary to make residuum suitable for them.

For this reason it is foreseen also a transformation block which performs mainly the following actions:

- it raises the differences in order to have only positive values;
- amplifies the values in a linear or non linear fashion, to help the encoder to manage it;
- it saturates the out-of-scale values.

Finally, in order to improve the overall behaviour of the chain, it is foreseen to select some area to be better encoded (in case of lossy encoding): these blocks may be chosen on the basis of the interest of the area, of the position or with any criteria.

Encryption Engine EE

The separate image components, EdgeC and ResC, above described and generated by blocks B and C, can be efficiently and selectively encrypted at an application layer: this enables most of the industrial applications described below.

In particular, the selector S depicted in Fig. 1 has the function of activating and deactivating and selecting the type of encryption on each image component.

More in details a different approach may be used to encrypt the different image contributions:

- since residuum has many characteristics of natural images, it can be both encoded and encrypted with several techniques typical of MultiMedia (e.g. digital watermarking, numerical methods, ...); the same is obviously true for edges when described by the edge-based image EBI (Bb).
- the method of edge description of (Ba) can be instead easily encrypted with a low effort. It will be clearer after the details provided for the preferred solutions, but hiding just some bits (even only the coordinates of edge starting point) it becomes difficult to recover other information. It becomes even harder if more bits (some directions) are selectively encrypted.

Network Adaptation Layer NAL

The Network Adaptation Layer (NAL) has the function of adapting the encoded and encrypted data, received from block EE, to network resources. For instance, in case of a packet network, NAL segments data and provides a way to fill all the accessory fields to complete each packet.

Since any network and transmission standard or solution may be used, this section is meant to show how the de-assembly of image into separate components may be optionally used to achieve a further gain, that is a more efficient use of network resources (in particular IP and packet network), this way selectively providing differentiated priority and resilience degree to the encoded image components.

More in details, the invention can improve the efficient NAL adaptation of video towards the transmission resources because:

- the image is naturally de-assembled into separate smaller units;
- edge related information (that is coming from block B) may be assigned to higher network importance (e.g. higher priority, lower discard policy of corresponding frames/packets) so that, even in case of network congestion, they are anyway available for a partial but still continuous service;
- similarly it can be enforced by some redundancy mechanism;
- in case encryption is not performed (completely or partially) at application layer (Encryption Engine), the NAL can select which packets can be encrypted at network layer (multilayer encryption solution).

The final encoding that results from NAL block can be considered the final output of the encoder and can deliver enhanced multimedia protected services (MPS) in a flexible way. Some possible industrial applications are illustrated below.

Decoder

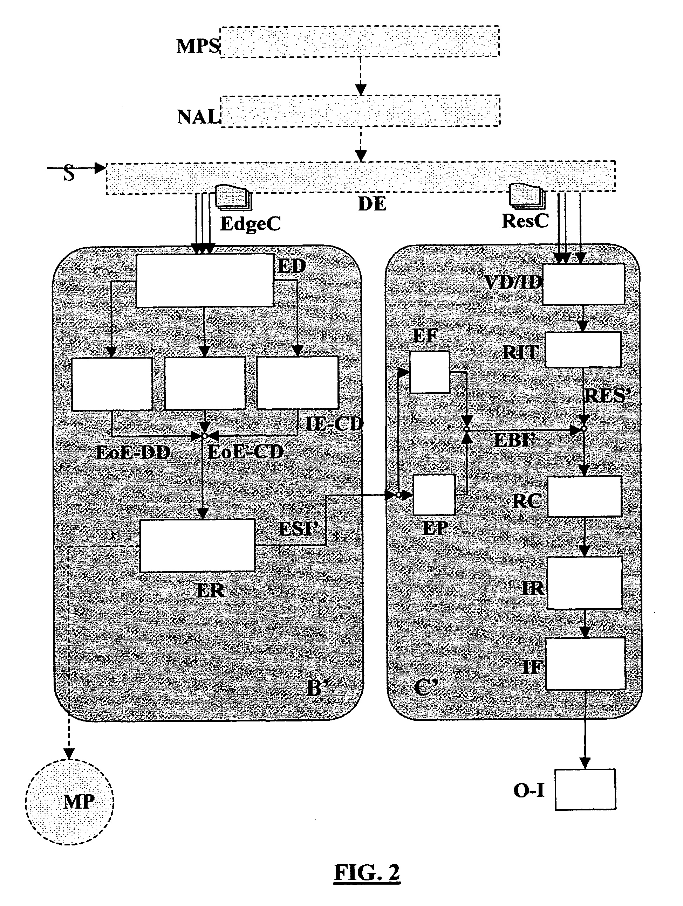

In fig. 2 a block-diagram of the video image decoder is shown, divided into main functional blocks. A general description is given below.

Most of the steps that are performed at the encoder side are conceptually reversible (except for lossy encodings) and can be dually performed at the decoder: the decoder is aimed at image reconstruction and can compute EdgeC and ResC contributions in order to reassemble an output image O-I which is the decoded version of I-I and can be displayed.

In fig. 2 a block-diagram of the video image decoder is shown. It is almost symmetrical to the encoder and differs from the encoder just slightly, the main differences are the following:

- edge detection is not performed at receiver side (edge information is received), so a block corresponding to the block A of the encoder is not provided;

- block B' performs the reverse functions of block B: it takes EdgeC and decodes it to generate an edge-set image ESI';
- block C' performs the reverse functions of block C: it takes ESI' from B' and generates an edge-based image EBI'; it takes ResC and builds Residuum RES'; finally it reassembles RES' and EBI' at the output for example to a display unit O-I;
- as a general rule all computing steps performed at the encoder on each of the image components is dually performed at the decoder: this is true also for the preferred solution of the decoder, as dual of the preferred solution of the decoder;
- in addition, some artefacts coming from approximations and reassembly can be erased by "intelligent" and "nonlinear" filtering steps.

For what concerns the optional blocks, they are symmetrically managed too:

- Decryption Engine DE is symmetrical to the Encryption Engine, and receives signal from NAL and supplies EdgeC and ResC contributions to blocks B' and C' respectively;
- NAL reassemble information from MPS (at the encoder it disassembled it) and interprets network information (such as redundancy and network-layer encryption) while could be transparent to priority information set by NAL at the encoder.

### Detailed Description of the Preferred Embodiment

In the following a preferred implementation for the encoder (fig. 1) and decoder (fig. 2) is described .

When possible the two correspondent blocks of the encoder and of the decoder will be contemporarily described.

### Double Edge Detection and Sampling (DED-S) in Block A - encoder

This block is fed with the input image I-I, preferentially in the digital YUV format, and returns a map containing the position of the detected edges and an image yielded by sampling the I-I according to the edge-map.

In order to produce the desired output, the following actions are needed:

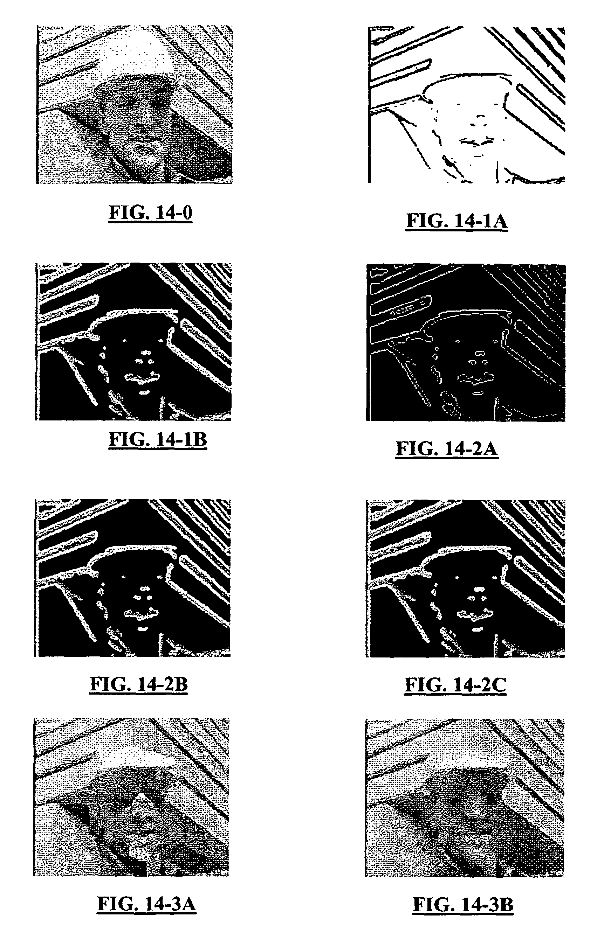

- an edge-detection algorithm is applied to the input image I-I (for example the image of fig. 14.0): any edge-detection operator may be used (e.g. Canny, Sobel, non linear - to promote long edges, Mumford-Shah-Euler): this produces a first version of the edge-set ES; typically these operators must be triggered in their parameters, so there are two possibilities: either these parameters are measured once and then set (fixed) or they can change as a function of the ES (for example its measure): this involves optional feed-back as a threshold triggering signal t-t, for instance from blocks SER and RTDC (see below);

- the edge set ES is than widened, so that at lest both the pixels of a strong edge-transition are taken into account (in case of a line, both its sides - e.g. upper and lower- are taken).This situation is depicted in fiig.3, where the original edge area ES is widened with 1 pixel neighborhood ES-AW.
- the input image I-I is sampled in pixels belonging to ES, producing a result as the image in fig. 14.1A.

### Sampled Edge Regularization (SER) - block A encoder

The edge-set ES and the sampled image produced by DED-S are to be regularised in order to make the encoding process of the edge information easier.

Block SER performs the following operations.

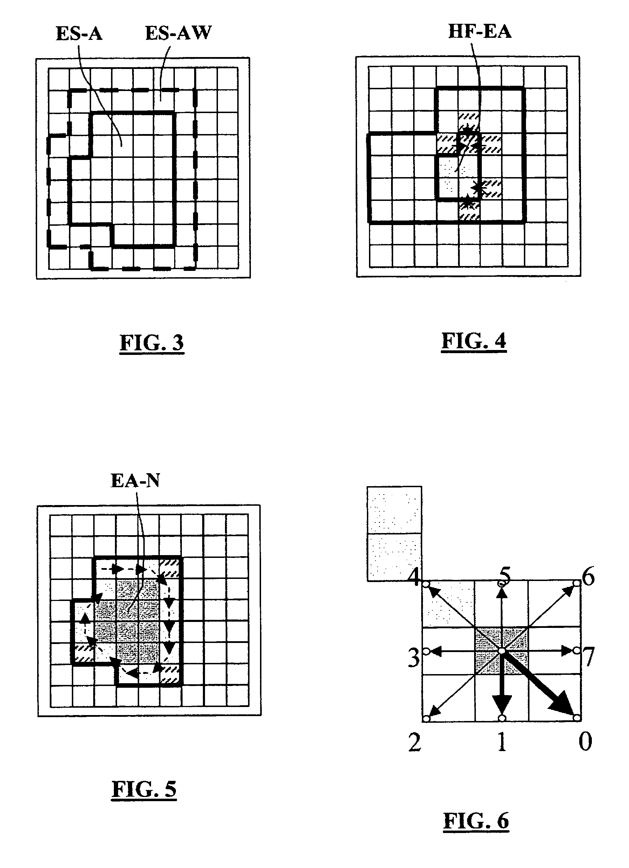

- Holes of edge-area filling HF-EA. The idea is to include in the edge area those pixels which have a meaningful number of neighbor pixels belonging to edges : for example, being N the pixels around the pixel under test (P), on its cross which belong to the image (usually 4; 3 on the frame of the image, ...), if N-1 of them belong to the edge, P is included in the edge too (see figure 4). This step may be performed more than once and is intended to make the edge-areas more continuous and regular: this is useful to have longer edges (few starting points) with statistically "smooth" contours and gives a great advantage in the Edge Description block (B). The method is illustrated in fig. 4.
- Edge narrowing EA-N, that is deleting isolated singularities (edge made up by a single pixels) and sharp corner (angles <90°). The last case, in particular is to make the contour of the edge (Edge of Edge - EoE) "smooth", and is consequently a trick for a better performance of EoE-DE in block B: a pixel belonging to EoE is discarded when two neighbor pixels around it and on its cross, belong to EoE themselves. The last case is shown in fig.5; see allso the example of image of fig. 14-1B.

The block SER returns the processed edge-set ES and the regularized edge-set image ESI which feed block B.

In case of moving pictures, it can optionally feed a motion prediction system MP (see below); an additional option foresees that SER feedbacks DED-S with its information t-t on ES measure to trigger DED-S detection parameters.

### Puzzling Edge Creator & Edge Adder (optional) EA - block A encoder

Some further manipulation stages may be optionally added: for instance it could be desirable to interrupt large areas without any detected edge in order to increase the edge-based information, that is to reduce a possible "saturation" in block RTDC, or to delete more details from the RES signal or even to puzzle RES. For this reason ES and ESI can be arbitrarily widened.

Edge Of Edge (EoE) and Internal Edge (IE) Splitting EoE-IE-S - block B encoder, and Edge Of Edge (EoE) and Internal Edge (IE) Reassembly ER - block B' decoder

The input of block EoE-IE-S is constituted by the regularized edge-set ES and edge-set image ESI and its aim is to further decompose the image, distinguishing two types of information inside the edge-areas, Edge of Edge EoE and Internal Edge IE:

- The Edge of Edge EoE is constituted by the pixels of the edge that are placed at the boundary between edges and smooth areas. This information is very important for the process provided by the EBI-E block and must be provided with higher precision. Moreover EoE allows to locate the edges inside the image and is the information strictly needed to describe the shape and position of the whole ES.

More in details when the contour of the edge area is specified, the whole information on edge position is available: some ambiguity could still come from a ring-like image which could puzzle the classification (for instance doubts on which side between the int/ext belongs to the edge): anyway this doubt is overcome if it is decided that EoE must include also the pixels of the first row of the frame (upper image boundary), which belong to the edge area.

Such an EoE topology can solve any ambiguous situation: when all the EoE are available, classification of areas come from a simple scanning on a column-by-column basis, toggling between Edge (E) and Non-Edge (NE) whenever an EoE pixel is met (paying attention to verticals EoE, in which only the first pixel toggles), and with the initialization with the information coming from the first row.

Finally EoE includes pixels which are contiguous in position and color/tone by construction, so can be easily encoded together. EoE feeds EoE-DE and EoE-CE; an example is shown in the image of fig. 14.2A.

- The Internal Edge IE, instead, describes the edge-area that is surrounded by the EoE and the position of each pixel belonging to this area is automatically determined, known the position of the EoE pixels; for this reason only the value of the grey tone of the pixels belonging to this area has to be specified. IE feeds IE-CE, as shown in the image of fig. 14.2B.

EoE-IE-S has a correspondent block at the decoder, inside block B' (fig. 2): it is called Edge Reassembly (ER) and fulfills the reassembly of the received and decoded EoE and IE contributions.

In case of moving pictures, it can optionally feed a motion prediction system MP.

Edge Contour Direction Encoder EoE-DE - block B encoder, and Edge Contour Direction Decoder EoE-DD - Block B' decoder

EoE has been built in such a way that:

- tends to comprehend large and regular sets of connected pixels (which segment the image);
- each connected set of EoE, which is met in raster scan order, can be described as a part of the overall EoE location;
- each connected set of EoE tends to be conservative in its directions and it is unusual that its direction keeps continuously changing pixel-after-pixel. Moreover when direction changes on a pixel, it is likely to get the latest directions. In other words EoE has "memory".

So the preferred encoding is based on a differential encoding of EoE direction, for example by means of a Markov-chain approach: the symbol '0' is given to the latest direction (or to the right horizontal direction if none), '1' to the direction close to direction '0' and closer to penultimate direction. The other symbols are given in a counter-clock or clock-wise manner, accordingly to the first 2 symbols.

Thanks to this choice EoE is made up by long sequences of 0, 1 and 7 (4, is never used, by definition).

These criteria are depicted in fig. 6 (previous pixels are filled with light grey; current pixels with dark grey).

The final result can be entropy-encoded in block EC in order to get a nice level of compression.

The operations performed by EoE-DE can be backward performed at the decoder by a correspondent block called Edge Contour Direction Decoder - (EoE-DD).

Edge Contour Color Encoder EoE-CE - Block B - encoder, and Edge Contour Color Decoder EoE-CD - block B' decoder

The grey tone of the edge must accomplish to a trade-off between the precision of the encoded information and its occupancy.

For this reason some tricks have been optionally implemented:

- not all the base 8 bits have been used to code the grey;
- the number of bits used is different for the contour (EoE) and the intern of the edge (IE) (because the pixels of the contour greatly influence the residuum, though propagation): good results are achieved using respectively 4 and 2 bits (either truncating or rounding the numbers); we will refer to these approximations respectively as H4 and H2.

- a sort of non linear filter (at least at decoder) is performed at the edges (block EF) in order to overcome the artifacts caused by approximations.

The EoE grey is encoded coherently as EoE topology: at the beginning of each EoE, there will be a starting symbol (dedicated symbol) and the initial grey tone (grey tone in the starting point); then the contour is followed as for directional encoding (EoE-DE), but now to differential encode the grey-tone (in other words the difference between the grey tone of current and previous pixel is encoded).

By definition of EoE, contiguous pixels on the edge contour assume contiguous values of grey tone: consequently the differential encoding of grey tone will generate mainly small values centered around zero; in case of H4, for instance, the encoding could virtually vary in [-16, +16], but typically [-8, +8] (always in that range, with some approximations) with a sharp statistical peak in zero.

In other words, the final result is particularly suitable for entropy coding and is sent to block EC.

Dual operations to those performed at the encoder are needed at the decoder: more in details a correspondent block called Edge Contour Color Decoder EoE-CD do them at the decoder. The only meaningful difference is that while EoE-CE can make a lossy approximation, EoE-CD, cannot, obviously, recover it.

Internal Color Encoder IE-CE - Block B - encoder, and Internal Color Decoder IE-CD - block B' decoder

In order to completely describe the edge area, the information on the grey tone inside the edge area is missing at this stage and hasn't been encoded yet: this is done by IE-CE.

Since there is still some information about image correlation that can be exploited (inside an edge there is still a strong relationship between pixels) the idea is that of trying to guess the values of grey and to transmit (that is, encode), just the correction of the "prediction".

The previously mentioned H2 approximation is performed on the grey tone at this stage.

The method adopted works scanning row-by-row: first of all, at each row, the edges that are met are classified according to their position respect to the position of the edges in previous line, except in the first row.

Let's define overlapping of Edge1 (row X1, column [Y1a, Y1b]) and Edge2 (row X1+1, column [Y2a, Y2b]), the intersection [Y1a, Y1b]∩[Y1a, Y1b]. Let's also define Edge1 (row X1) "parent" of Edge2 (row X1+1), if Edge1 and Edge2 overlap. In this case Edge2 is child of Edge1.

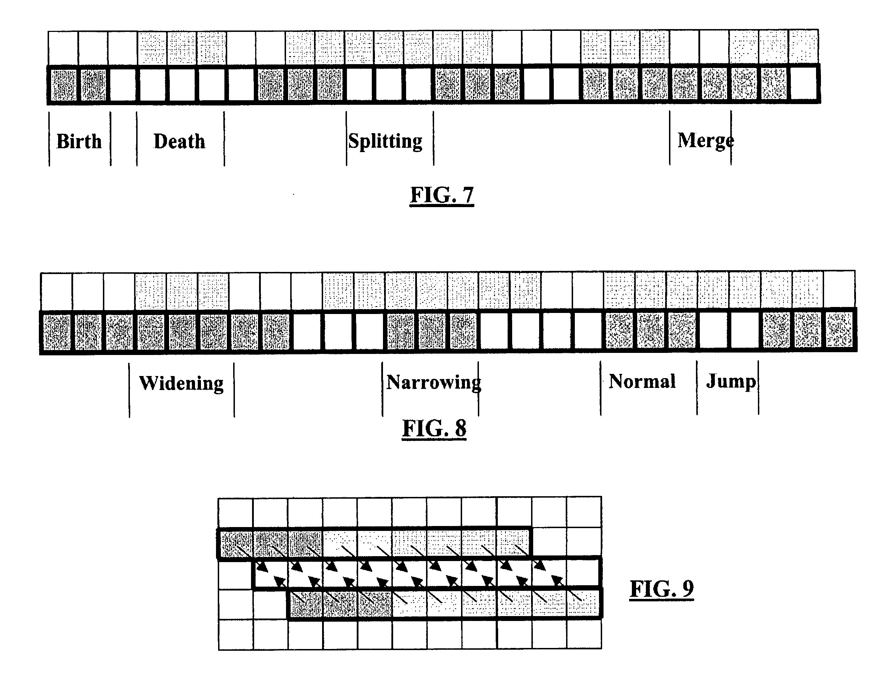

The following cases are distinguished, and shown in fig. 7, where two consecutive rows are depicted:

- Birth (or New): no overlapping with any edge of previous line;
- Death: no overlapping with any edge of following line;
- Splitting: an edge at row X1 (partially) overlaps to two (or more) edges at row X1+1 (called left and right child edge);
- Merge: an edge at row X1 (partially) overlaps to two (or more) edges at row X1-1 called left and right parent edge);
- Normal: the other cases.

In order to even improve the behavior the following cases are added, and shown in fig. 8, where two rows are again depicted:

- New: also the second (Normal) line after a Birth;
- Widening: a sub-case of Normal edge; when the edge at row X1 is wider - at least L pixels (L=3) - than its parent edge in previous row (X1-1);
- Narrowing: a sub-case of Normal edge; when the edge at row X1 is narrower - at least M pixels (M=3) - than its parent edge in previous row (X1-1);
- Jump: whenever less than J pixels (e.g. J=3) are interleaved between two edges (Ea, Eb) in the same line, Ea and Eb are considered as a whole (the same edge), to be classified accordingly to previously stated criteria.

Once the edges on a line are classified, they are associated to displacement operators Gc_sx, Gc_dx, Gc_D, Gg_sx, Gg_dx, Gg_D defined in the following way:

*"Computed Displacement" (Gc)*

Gc_D: it is the displacement of the current line that minimizes the SAD (sum of absolute differences) between the edge under evaluation and its "parent", according to following formula:

$$\min_{-4 \le sh \le 4} \left\{ \sum_{D_E^{i-1} \cap D_E^i} \left| x_j^{i-1} - x_{j-sh}^i \right| \right\}$$

Gc_sx: the same as Gc_D but applied to the left halves of the Edge and of its parent.

Gc_dx: the same as Gc_D but applied to the right halves of the Edge and of its parent

*"Geometrical Displacement" (Gg)*

Gg_sx: the displacement between the most left pixel in the edge and the most left pixel in the edge ot its parent.

Gg_dx: the displacement between the most right pixel in the edge and the most right pixel in the edge ot its parent.

Gg_D: the average of Gg_sx and Gg_dx.

To perform the below described prediction you can use Gc's of previous line "parent" edge (extrapolation of the slope), Gg's of current line edge, or an average of them; for this reason let's refer generically to G_D, G_sx, G_dx.

Prediction is then performed this way:

- Normal: the current Edge E2 is predicted as the displacement G_D of its parent edge.
- Splitting: left child Edge is predicted using G_sx (from its parent); right child Edge is predicted using G_dx (from its parent).
- Merge: the left half and the right half are predicted respectively from left parent (with its G_D1) and from right parent (with its G_D2).
- Widening: the left half and the right half are both predicted form parent edge but using respectively G_sx and G_dx.
- Narrowing: the same as for Widening.
- New. The first line is provided in a differential way: the first pixel is given while the following are specified as difference to the previous one; the second line can be described in the same way or, alternatively as correction to prediction performed using the Geometrical Displacement Operator.
- In case some pixels are still missing or cannot be predicted, they are "extrapolated".

The information to be encoded is then the difference between the actual H2 value of the pixel and its H2 prediction.

Finally to improve the overall encoding and better compressing the Internal Edge IE, edge description may be optionally specified only for some lines. For instance a good result is obtained taking and discarding alternatively the edge description respectively on odd and even lines of an edge (pay attention: even/odd isn't referred to the row of the image but to the row of that particular edge, starting form its birth!). Obviously the first 3 lines cannot be discarded.

In order to be coherent at the encoder and at the decoder, whenever a row is "discarded", it is computed as if no correction to the prediction were needed.

Dual operations to those performed at the encoder are needed at the decoder: more in details a correspondent block called Internal Edge Color Decoder IE-CD do them at the decoder. The only meaningful difference is that while IE-CE can make lossy approximations, IE-CD cannot, obviously, recover them.

Actually, inside the decoder, the discarded edge rows must be reconstructed: once more a displacement operator SAD-based is used; it is applied to the two edge rows which are known (upper and lower lines) to extract a mean color-displacement (or slope) to perform interpolating prediction.

$$\min_{-4 \leq sh \leq 4} \left\{ \sum_{D_E^{i-1} \cap D_E^{i+1}} \left| x_{j+sh}^{i-1} - x_{j-sh}^{i+1} \right| \right\}$$

The process is depicted in fig. 9.

Entropy Coding EC - Block B - encoder, and Entropy Decoding ED - block B' decoder

The outputs of EOE-DE, EOE-CE, IE-CE are compressed using any entropy coding technique: they are taken as inputs of block EC which compresses them and produces the Edge Code (EdgeC), made up by the three correspondent compress codes of EOE-DE, EOE-CE, IE-CE.

The best results are obtained using Huffman compression (modified to compress long sequences of the same symbols): it is then the preferred solution when configured in the following ways.

*- EOE- DE Compression*

- Used symbols for directions (0-7, 4 excluded);
- Starting symbol: 4; it is followed by coordinates of the starting point (for example in binary format);
- Aggregate Symbols: 8 for long sequence of '0' (for instance, 14 times '0', in our prototype); 9 for long sequence of '1' (for instance, 4 times '1', in our prototype).

*- EOE- CE Compression*

- Initial offset of +8 (to have only positive numbers);
- Used symbols for color/grey-tone differences (16);
- One Starting symbol;
- One Aggregate Symbol: long sequence of '0' (for instance for 5 times '0', in our prototype).

*- IE- CE Compression*

- Initial offset of +8 (to have only positive numbers);
- Used symbols for error correction of predicted grey tone (9);
- One "Carriage Return" symbol;
- Aggregate Symbols: for long sequence of '0' (in our prototype 3 aggregate for sequences of respectively: 25-15 and 10 '0'es).

The same settings are correspondingly used in a dual block Entropy Decoder ED at the decoder, which reverses EC block and decompresses the three components of the edge description.

Edge Filtering EF - Encoder - Block C, and Edge Filtering EF - Decoder - Block C' -

Some kind of filtering is needed at the edges in order to overcome the artifacts caused by H2-H4 approximations (for instance in IE-CE): this is done by EF.
This edge filtering must be non-linear (in order not to cut the high-spatial frequencies inside the edge area) and comprises:

- more filtering steps with decreasing masks sizes, centered in the pixel P (to be filtered);
- filtering with weights depending on the distance from P and with a greater weight for contributes from EoE (being H4 instead of H2 they are "less wrong");
- admission check: a contiguous pixel of edge (respectively EoE) takes part to filtering of pixel P if its grey tone do not differ more than 2*H2 (respectively 2*H4) from the grey tone of P.

This edge filtering step may be performed on IE and, optionally, on EoE (in this case either before or after edge propagation, in any case before residuum calculation).
In order to be coherent at the encoder and at the decoder, the input of EF mustn't be the original edge but the "encoded" version, including all the approximations used inside EoE-CE and IE-CE. For this reason the inputs of EF at the encoder are the outputs of EoE-CE and IE-CE.
An example of results is shown in the image of fig. 14.2C.
Edge filtering is performed also at the decoder: this function is not "reversed" and can take directly the output of ER (the block which reassembles the separate edge components, as decoded).

Edge Propagation EP - block C encoder, and Edge Propagation EP - Decoder - Block C' -

Edge Propagation is actually the main step to perform image decomposition.
Edge propagation creates a preview based on the edge information previously encoded. It is issued in two phases:

- Propagation.
- Non-linear and edge-sensitive filtering.

The first phase creates an image which is not smooth and needs to be relaxed.
The second step overcomes this problem filtering in an "intelligent" way.

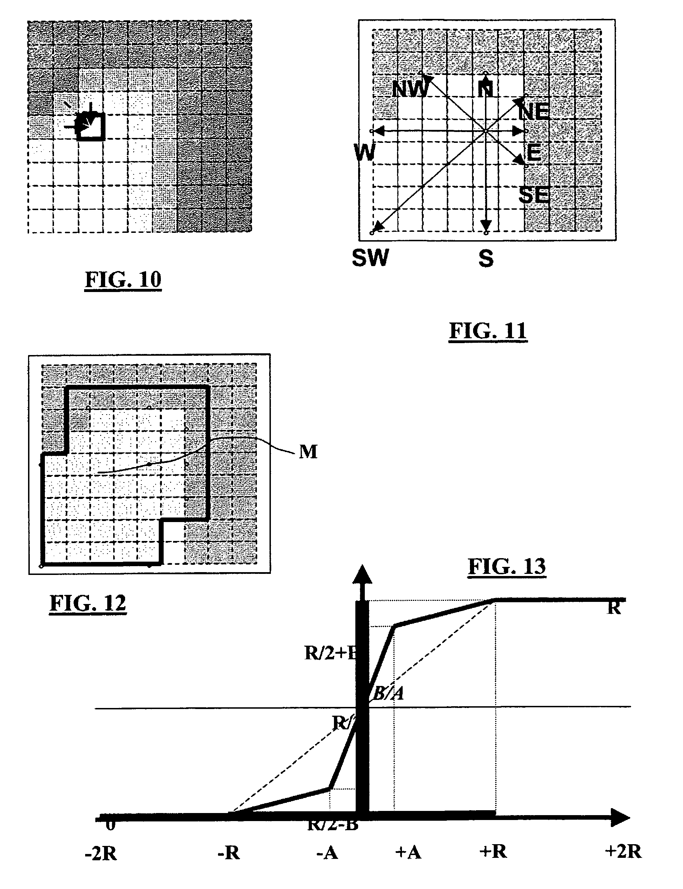

Propagation is a simple and iterative method: starting from a base made up of EoE pixels, the contiguous pixels are assigned a grey tone which is some average value of the 2-3 contiguous pixels belonging to EoE. In the following step the base is not EoE but the newly included pixels.
Several choices are available both for the average calculation and the concept of neighboring (e.g.: on a cross or on the whole square - see options in fig. 10).
The example of the image of Fig- 14.3A shows the result of this step.
Concerning then the non linear and edge sensitive filtering step, on the pixels of the out-of-edge area, filtering is performed to smoothen color, that can be easily subtracted to the original image without creating artificial discontinuities.
On the other hand if filtering didn't consider image edges, it would ruin this precious information. For this reason the shape of the masks which drive filtering is dynamically adapted to the edge location.
More in details (see figure 11) for example, for a filtering step of amplitude 9*9, the 8 main directions (N, NE, E, SE, S, SW, W, SW) around the pixel to be filtered are scanned up to distance 4; whenever an edge is met the mask stops in that direction.
Finally a regular shape is given to the mask M putting together and interpolating these directional samples (for example in sector N-NW, the minimum between distances sampled in N and NW can be used - see fig. 12).
The image of Fig- 14.3B shows the result of this step.
To make filtering more efficient, variable weights can be assigned to the pixels inside the mask M: in particular weight may depend on the following conditions:

- the distance from the "central" pixel under filtering;
- if the pixel belongs or not to the edge (EoE condition).

Therefore the Edge Propagation (EP) provides for computing:

a) iterative propagation of the Edge of Edge (EoE), averaging the known neighbor pixels;
b) non-linear and edge-sensitive filtering of the out-of-edge area, said filtering being performed by means of variable shape masks which sense edges, so that filtering do not go beyond edges, and more filtering steps as the previous one and with decreasing mask sizes, therefore:

- centering a square mask in the pixel (P) to be filtered;
- scanning the 8 main directions (N, NE, E, SE, S, SW, W, SW) around the pixel to be filtered up to the boundaries of the square mask; whenever an edge is met the mask stopping in that direction;

- giving a regular shape to the mask putting together and interpolating the directional samples;
- weights inside the mask possibly depending on distance from the pixel (P) and EoE condition.

Edge propagation is performed also at the decoder (fig. 2), where is needed to re-build the original image: this function is not "reversed" and can take directly the output of block ER (the block which reassembles the separate edge components, as decoded).

Residuum Extraction RE - block C encoder, and Residuum Correction RC - block C' decoder

Residuum as computed in the method **Ba,** generates a smooth image as the difference between the original image and the edge-predicted one.
RE performs then the following actions:

- reassembles results from EF and EP selectively - the result is an edge-based image EBI which takes the values of EF output in pixels belonging to the edge-set ES and takes the values of EP output outside ES;
- gets residuum RES as the difference between EBI and the original image I-I;

Residuum can be calculated:

- only in the out of edge area (in that case the edge area will be filled with half-scale grey tone);
- also in the edge area: in this case it has the benefits of recovering many approximations introduced in edge processing in the previous steps.

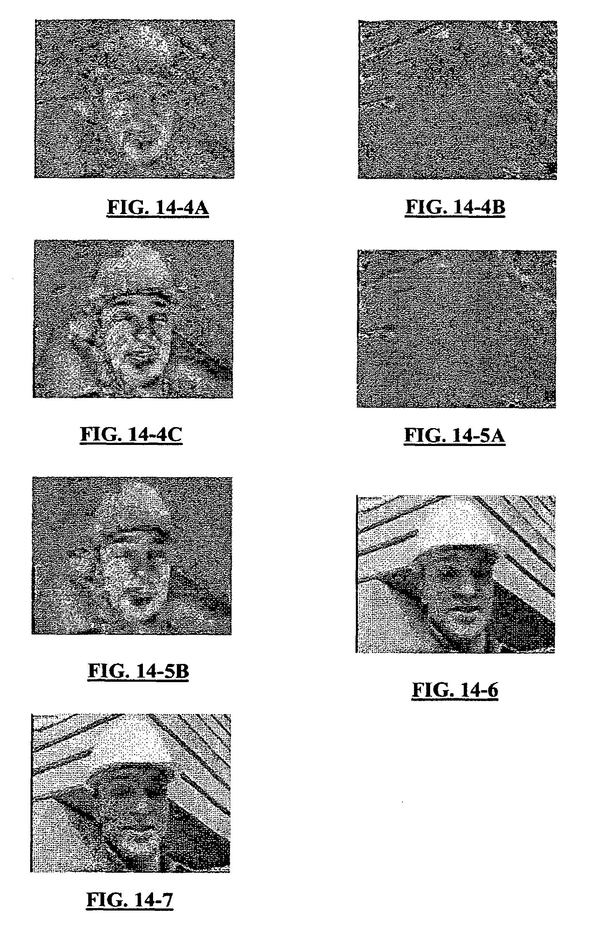

In the proposed preferred solution the second approach is used: in order not to have a residuum too variable inside the edge (it would include least-significant bits), the edge area is separately filtered before residuum calculation (EF).
An example of result (residuum RES) is shown in the image of fig. 14.4A.
Dual operations to those performed at the encoder are needed also at the decoder: more in details a correspondent block called Residuum Correction (RC) do them at the decoder.
RC performs then the following actions:

- reassembles results from EF and EP selectively - the result is an edge-based image EBI' which takes the values of EF output in pixels belonging to the edge-set ES and takes the values of EP output outside ES;
- takes residuum as decoded (RES') an adds it to the edge based image EBI to reconstruct the image.

Residuum Transformation and Differentiated Coding RTDC - block C encoder, and Residuum Inverse Transformation RIT - block C' decoder

Block RTDC has the function of transforming Residuum in order to make it suitable for traditional encoding (for instance for MPEG encoding).
If the original image assumes grey tones in [0-255], residuum can assume values in [-255, +255], but will have most of its values around 0. This has the following main drawbacks:

- The values are not in the original range (on the other hand it is the same for an offset of 256 transforms the interval in [0, +512], centered around 256).
- Any encoder could discharge most of "corrections" are available in the residuum, taking them as "meaningless".

A nice solution is to "transform" RES values in order to:

- amplify values around 0;
- have a "mostly" reversible transformation;
- compress values into the original range;
- foresee a "saturation" mechanism for out-of range values.

The simplest solution is that of a symmetric function as the one depicted in fig. 13 where:

- [0, R] corresponds to the interval of values which the pixels of original image may assume (for instance [0,255]);
- [-R, R] the interval of values which RES may assume;
- A is a value within [0,R] which determines the interval [-A, A] in which RES values are amplified by the function;
- B/A is the amplification ratio of the function in the interval [-A, A]: here the function is linear with R/2 offset in order to have only positive values;
- for values greater than R and smaller than -R the function saturates (respectively R and 0);
- for values in [-R, -A] and [A, R] the slope is determined in order to connect the above described ranges.

As a final drawback the number of the pixels whose color/tone is saturated by the transformation could be too high: to overcome this, RTDC may also optionally:

- count this number;
- compare it with a threshold (e.g. 5% of total pixels in the frame)
- optionally feedback this information to the edge detector (DED-S) to trigger the detector thresholds and parameters.

Some image encoders (such as the one described in the standard H.264) can encode an image with a quality variable as a function of the area it is applied to: for example H.264 can encode each macro-block with a different quality (as a function of a parameter called QP).

For this reason RTDC may optionally measure/estimate the achieved final quality and decide where quality should be increased.

From a practical point of view, since higher PSNR (Peak Signal-to-Noise Ratio) losses are located inside edges (because of H2, H4 approximations), RTDC may tag the macroblocks containing more edge pixels, in order to have them better encoded and to improve the overall PSNR (if VC/IC supports this option).

Examples of images at the output of block RTDC are shown in Fig. 14-4B and 14-4C.

RTDC function is reversed at the decoder by RIT (Residuum Inverse Transformation). Fig. 2.

In particular RIT must inverse the transformation performed at the encoder on RES (for instance the function depicted in fig. 13).

Video and/or Image Encoder VC/IC - Encoder - Block C, and Video and/or Image Decoder VD/ID - Decoder- Block C'

The block VC/IC finally:

- takes RTDC output (the RES as transformed by RTDC)
- encodes and compresses it.

Any image encoder can perform this function: moreover DCT-based (or wavelet) processing is easier on RES than on I-I because the image is "smooth" and edge-deprived.

This encoding step has its counterpart at the decoder in VD/ID (the correspondent decoder).

See example of images of Fig. 14-5A and 14-5B

Image Filter IF - Decoder- Block C' -

This additional block may perform a further filtering step for several reasons, for instance:

- make smooth the separate image contributions;
- overcome any artifacts generated by differential coding (in case the encoding quality is not uniform inside the image).

This step doesn't correspond to any block inside the encoder.

An example of image at the output of IF is shown in Fig. 14-6. For comparison in Fig. 14-7 an example of the same image as Fig. 14-6 is given when coded in a traditional DCT_based encoding.

Generalised Architecture

For simplicity the method has been explained with reference to a still image (I-I) with the luminance as the only non-trivial component.

Anyway, any image format, uncompressed or decompressed, (or frame format, in case a video sequence is considered) is suitable for the proposed compression scheme. In this section it is explained how to apply the same technique to other formats. The explanation is provided for the encoder: the same changes are symmetrically applied to the decoder.

Analogue Image: they are first digitalized (sampled and quantized).

Colored Image (YUV): in case of YUV (where Y is luminance and U-V are the chrominance components) there are several options; for instance:

1. The whole method is applied to the only Y, since Y includes strongest final edges, while U-V color components are managed traditionally.
2. The whole method is applied separately to any of components.
3. Edge Detection inside block A is applied to the only Y component, since Y includes strongest edges, and the image separate components are sampled on the same edge set (ES) to produce separate ESI components. So blocks B and C are performed based on the Y-driven ESI but considering all the involved separate components: for instance EoE-CE, IE-CE, EF, EP, EBI-E, RE produce multiple description for such components. This approach improves performance because lets you describe the edge set (for instance EoE-DE) only once.
4. The same as 3 but Edge Detection is applied to all of the components. So you get three ES (ESy, ESu and ESv) which are likely to be (at least) partially coincident and can be merged into an only ES: this is the OR of them (a pixel belongs to the final ES if it belongs at least to one among ESy, ESu, ESv).

Solutions 3. and 4. are the preferred one.

The same applies to other image descriptions, such as RGB formats, where separate components are provided.

Colored Image (other formats) — E.g. RGB format: methods 2 and 4 of YUV formats can be applied.

Video Encoding (Moving Pictures): the trivial solution may be applied to each frame. For a better solutions some concepts from most used video encoding techniques (e.g. MPEG, H.264) are recalled.

For moving pictures, exploiting redundancy between pictures gives a higher compression factor. So the adopted solution is to described completely a "starting" frame (frame I) and then to describe a certain amount of following frames only by the way in which they differ from the one before (this set is called Group of pictures- GOP).

The sequence begins with an I (intra-coded) picture as an anchor, and is followed by a number of forward predicted or P pictures. It is possible also to perform backward prediction (B-frames)

According to this approach the preferred solution is to apply the invention to the only I frames.

The case of moving pictures enables also evolution of Motion Prediction (MP) and compensation. Above described prediction inside GOP is based also on motion prediction and compensation.

In MPEG the picture is broken up into macroblocks (fixed shape areas), each of which has its estimated motion vector, which is used for prediction.

The problem is if the edge of a moving object lies across a macroblock: this leads to bad behaviour of the technique: typically only part of the macroblock is moving.

The proposed solution, when applied to moving pictures, can overcome also this limitation. In fact new studies try to map the movement of the shapes (and then of the edges) inside a frame to macroblocks. This leads to complicated solutions that typically require additional information (about edge location and edge shape) to be transmitted.

Anyway the problem becomes more simple when applied to the invention, since the edge is already provided (in its shape, position and color) by EdgeC. Moreover, the adopted edge description (EoE-DE) is specifically suitable for the motion estimation and prediction between two frames of a video sequence: in case of translatory and rigid motion, it is sufficient to specify the new position of the start point of each edge involved in the movement (or the displacement and rotation, for instance). In case of more complex movements, such as deformations, more elaborate algorithms can be applied in order to modify the edges. In any case, also these solutions are more simple and scalable when applied to the proposed invention.

For this reason, both in Fig. 1 and in Fig. 2 an optional block performing MP is depicted.

Industrial Applications

The invention is then innovative for several reasons; we can mention:

- it is not just matter of providing separately additional and redundant information but it involves a sort of "decomposition" of the image into edges (and edge related contents) and residuum, after edge removal - so it conceptually differs form existing solutions for multiple description and side information transmission;
- it successfully creates a residuum image which "erases" edges and is smooth, rich of details but, at the same time, easy to be efficiently encoded (for example using DCT-based methods);
- it preserves the overall achieved quality while providing a compact description for a baseline encoding;

- segmentation and "coloured-edge" encoding is not only "adopted", but is also customised to well suite the overall architecture, to integrate in it and not to become too heavy with respect to the traditional representations;
- it provides a full working solution and a plenty of novel solutions to solve open issues inside each block, as described in the preferred solution detailed description;
- it is compatible with most video and image existing encoding standards, (for example DCT-based ones, such as H.264), and, moreover, may be used with and/or adapted to any existing or future encoder (resp. decoder) as a pre-processing (resp. post-processing) block;
- It helps DCT-based processor to work fine with few contributes contemporary removing and preserving edges;
- it is used in an innovative manner to solve the problem of video encryption, enabling also other services (e.g. partial encryption for preview);
- it enables a differentiation of video components importance towards Network Adaptation Layer (NAL).

The proposed solution is in fact particularly interesting for any practical application which can exploit its main features, that is:

- "natural" description;
- de-assembly of image into separate components;
- partitioning of the image into complementary components.

The first industrial application which is claimed is <u>selective encryption</u> (SE) of video and images: encryption is a very resource consuming processing, so it is particularly critical (especially if small and mobile devices and terminals are used) and it is important to limit it without compromising digital right management (DRM).

In the proposed solution:

- compared to an existing DCT-based image encoding technique, even when the proposed solution implies a higher overall occupancy, the information which needs to be encrypted is lower;
- it can be selected which component(s) to encrypt: if both ESI and RES are encrypted the image is fully encrypted; in case ESI is encrypted, RES become meaningless (EBI cannot be reconstructed) and selective encryption is obtained; finally if only RES is encrypted, a rough view of the image is available but details are hidden (this could be a sort of preview of the contents);
- moreover the edge information, as implemented in the preferred solution, is encrypted very easily; in particular a strong level of encryption may be achieved just by hiding the bits of the location of the starting point or the starting direction; without edge location, the only intelligible thing is residuum which is completely unsatisfactory and colour-deprived. Another application may be to an <u>efficient use of network resources</u> (in particular, but not only, for IP and packet network): a natural de-assembly of the image into separate "packets" is provided, and this can be also reflected by Network Adaptation Layer (NAL);

- for instance edge related information may be assigned to higher network importance (e.g. higher priority, lower discard policy of corresponding frames/ packets) so that, even in case of network congestion they are likely to be available for service continuity (even if the quality is worsened);

- this seems particularly interesting for video-transmission over MAC layers; a sub-case is that of wireless media (e.g. WLAN). In MAC layers, feedbacks from Collision Detection (CD) and Collision Avoidance (CA) protocols and statistics may be used to selectively make decisions on what should be transmitted in the network (the complete image vs. the only EBI).

Further implementation details will not be described, as the man skilled in the art is able to carry out the invention starting from the teaching of the above description.

The present invention can be advantageously implemented through a program for computer comprising program coding means for the implementation of one or more steps of the method, when this program is running on a computer. Therefore, it is understood that the scope of protection is extended to such a program for computer and in addition to a computer readable means having a recorded message therein, said computer readable means comprising program coding means for the implementation of one or more steps of the method, when this program is run on a computer.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the spirit and scope of the invention are deemed to be covered by this invention.

## Claims

1. Method for edge-based image and video encoding, suitable for selective encryption, **characterized in that** it comprises decomposing original images (I-I) according to the following steps:

   - edge detection, for regularization, enlargement refinement, and generation of an edge-set image (ESI);

   - edge description through positioning and shaping of the edge-set image (ESI), for gray-tone/ luminance and/or colour sampling in the edge-set image (ESI), for generating encoding bitstreams (EdgeC) describing the edge-set image (ESI);

   - residuum image extraction as difference between the original image (I-I) and the edge-based image and encoding according to any image description/compression standard for generating one or more encoding bitstreams describing the residuum (ResC);

   **Characterized in that** said encoding bitstreams (EdgeC) and said encoding bitstream describing the residuum (ResC) feed an encryption engine (EE) for selective encryption where the type of the encryption applied to each image component can be activated/ deactivated and selected **and in that** said edge description comprises detection of a contour of an edge (EoE) including pixels which are contiguous in position and color/tone and differential encoding of said contour of the edge (EoE) direction **and in that** a strong level of encryption is achieved just by hiding the bits of the location of the starting point or the starting direction of the contour.

2. Method according to claim 1, wherein said differential encoding is carried out by means of a Markov-chain approach.

3. Method according to claim 1, wherein the symbol '0' is given to the latest direction or to the right horizontal direction if none, '1' to the direction close to direction '0' and closer to penultimate direction and wherein the other symbols are given in a counter-clock or clock-wise manner, accordingly to the first two symbols.

4. Method according to one of the preceding claims, **characterized in that** said encoding bitstreams (EdgeC) describing the edge is generated by the following steps:

   - Edge Of Edge (EoE) and Internal Edge (IE) Splitting (EoE-IE-S), distinguishing two types of information inside the edge-areas, Edge of Edge (EoE) and Internal Edge (IE), the Edge of Edge (EoE) being the pixels of the edge that are placed at the boundary between edges and smooth areas; the Internal Edge (IE) describing the edge-area that is surrounded by the Edge of Edge (EoE);
   - Edge of Edge Countour Direction Encoding (EoE-DE) and Edge of Edge Countour Colour Encoding (EoE-CE);
   - Internal Edge Color Encoding (IE-CE);
   - Entropy Coding (EC), namely the outputs of EOE-DE, EOE-CE, IE-CE are compressed using an entropy coding technique, and producing said encoding bitstreams (EdgeC) describing the edge.

5. Method according to claim 1, **characterized in that** the outputs of the encryption engine is transmitted through a Network Adaptation Layer (NAL), having the function of adapting the encoded and encrypted data to network resources and selectively providing differentiated priority and resilience degree to the encoded image components.

6. Method according to claim 1, **characterized in that** said step of edge-description comprises:

- receiving said edge-set image (ESI);
- generating said encoding bitstreams (EdgeC) describing the edge;
- generating an additional output, derived from ESI refinement, which can be ESI itself or ESI with an additional classification of ESI contour.

7. Method according to claim 1, **characterized in that** said step of residuum image encoding comprises

- receiving said additional output from said step of edge description, and the said input image (I-I);
- extrapolating edge-set image (ESI) information and generating an Edge-Based Image (EBI);
- generating Residuum (RES) as a "correction" to the edge-based image (EBI) with respect to the input image (I-I);
- modifying the Residuum (RES) and encoding it, generating one or more encoding bitstream describing the residuum (ResC).

8. Method for edge-based image and video decoding, in particular for an edge-based image and video encoding according to claim 1, **characterized in that** it comprises the steps of:

- receiving edge information from said encoding;
- selectively decrypt the encoded edge-based image and video, as an inverse function of said selective encryption, obtaining said encoding bitstream (EdgeC) and said bitstream describing residuum (ResC);
- taking said encoding bitstreams (EdgeC), decoding and processing it to generate a decoded edge-set image (ESI');
- taking said decoded edge-set image (ESI') and generating a decoded Edge-Based Image (EBI');
- taking said bitstream describing the residuum (ResC) and building a decoded residuum (RES');

- reassembling said decoded residuum (RES') and said decoded Edge-Based Image (EBI) to generate a decoded image.

9. Method as in the preceding claim 8, **characterized in that** said video and image signal is one of the following: a still image or a video sequence; an analogue or a digital signal; a gray-tone or a color image, like YUV, RGB format.

10. Apparatus for edge-based image and video encoding, in particular for the implementation of the method according to any of claims 1 to 7, comprising:

- means for decomposing video and images (I-I);
- means for edge detection, for generating an edge-set image (ESI);
- means for edge description for gray-tone/luminance and/or colour sampling along the edges, for generating encoding bit-streams (EdgeC) describing the edge-set image (ESI);
- means for residuum image extraction as difference between the original image (I-I) and the edge-based image and encoding according to any image description/ compression standard for generating one or more encoding bitstream describing the residuum (RecC);

**characterized in that** it further comprises an encryption engine (EE) for selective encryption of said encoding bitstreams (EdgeC) and said encoding bitstream describing the residuum (ResC), and means for the activation/deactivation and selection of the type of encryption applied to each image component.

11. Apparatus for edge-based image and video decoding for the implementation of the method according to any of claims 8 to 9, **characterized in that** it comprises:

- means for receiving edge information from said encoding;
- means for selectively decryption the encoded edge-based image and video, as an inverse function of said selective encryption, for obtaining said encoding bitstreams (EdgeC) and said bitstream describing the residuum (ResC);
- means for taking said encoding bitstreams (EdgeC) and decoding it to generate a decoded edge-set image (ESI');
- means for taking said decoded edge-set image (ESI') and generating a decoded Edge-Based Image (EBI');
- means for taking said bitstream describing the residuum (ResC) and building a decoded residuum (RES');
- means for reassembling said decoded residuum (RES') and said decoded Edge-Based Image (EBI') to generate a decoded image.

**12.** Computer program comprising computer program code means adapted to perform all the steps of claims 1 to 9, when said program is run on a computer.

**13.** A computer readable medium having a program recorded thereon, said computer readable medium comprising computer program code means adapted to perform all the steps of claims 1 to 9, when said program is run on a computer.

**Patentansprüche**

**1.** Verfahren für die kantenbasierte Bild- und Videocodierung, das für die selektive Verschlüsselung geeignet ist, **dadurch** charakterisiert, dass es das Zerlegen von Originalbildern (I-I) in Übereinstimmung mit den folgenden Schritten umfasst:

- Kantenerfassung zur Regularisierung, Vergrößerungsverfeinerung und Erzeugung eines Kantensatzbilds (ESI);
- Kantenbeschreibung durch Positionierung und Schärfung des Kantensatzbilds (ESI) für die Graustufen/Farbdichte- und/oder Farbabtastung in dem Kantensatzbild (ESI) zum Erzeugen von Codierungsbitströmen (EdgeC), die das Kantensatzbild (ESI) beschreiben;
- Residuumbildextraktion als Differenz zwischen dem Originalbild (I-I) und dem kantenbasierten Bild und Codieren in Übereinstimmung mit irgendeiner Bildbeschreibungs-/Bildkompressionsnorm zum Erzeugen eines oder mehrerer Codierungsbitströme, die das Residuum beschreiben (ResC);

**dadurch gekennzeichnet, dass** die genannten Codierungsbitströme (EdgeC) und der genannte Codierungsbitstrom, der das Residuum beschreibt (ResC), zur selektiven Verschlüsselung einer Verschlüsselungsmaschine (EE) zugeführt werden, wobei der Typ der auf jede Bildkomponente angewendeten Verschlüsselung aktiviert/deaktiviert und gewählt werden kann, und **dadurch**, dass die genannte Kantenbeschreibung die Detektierung einer Kontur einer Kante (EoE), die Pixel enthält, deren Position und Farbe/Ton zusammenhängend sind, und die differentielle Codierung der Richtung der genannten Kontur der Kante (EoE) umfasst, und **dadurch**, dass nur durch Verbergen der Bits des Orts des Anfangspunkts oder der Anfangsrichtung der Kontur ein starker Verschlüsselungsgrad erzielt wird.

**2.** Verfahren gemäß Anspruch 1, bei dem die genannte differentielle Codierung mittels eines Markov-Ketten-Zugangs ausgeführt wird.

**3.** Verfahren gemäß Anspruch 1, bei dem das Symbol '0' der letzten Richtung oder der horizontalen Rechtsrichtung, falls keine vorhanden, gegeben wird, '1' der Richtung in der Nähe der Richtung '0' und näher zur vorletzten Richtung gegeben wird, und bei dem die anderen Symbole in Übereinstimmung mit den beiden ersten Symbolen nach Art entgegen der Uhrzeigerrichtung oder in Uhrzeigerrichtung gegeben werden.

**4.** Verfahren gemäß einem der vorhergehenden Ansprüche, **dadurch gekennzeichnet, dass** die genannten Codierungsbitströme (EdgeC), die die Kante beschreiben, durch die folgenden Schritte erzeugt werden:

- Kantenkanten-(EoE-) und Innenkanten-(IE-) Aufteilung (EoE-IE-S), die zwei Typen von Informationen innerhalb der Kantenbereiche, Kantenkante (EoE) und Innenkante (IE), unterscheidet, wobei die Kantenkante (EoE) diejenigen Pixel der Kante sind, die an der Grenze zwischen Kanten und glatten Bereichen angeordnet sind; wobei die Innenkante (IE) denjenigen Kantenbereich beschreibt, der von der Kantenkante (EoE) umgeben ist;
- Kantenkanten-Konturrichtungscodierung (EoE-DE) und Kantenkanten- Konturfarbcodierung (EoE-CE);
- Innenkanten-Farbcodierung (IE-CE);
- Entropiecodierung (EC), d. h., die Ausgaben der EoE-DE, der EoE-CE, der IE-CE werden unter Verwendung einer Entropiecodierungstechnik komprimiert und erzeugen die genannten Codierungsbitströme (EdgeC), die die Kante beschreiben.

**5.** Verfahren gemäß Anspruch 1, **dadurch gekennzeichnet, dass** die Ausgaben der Verschlüsselungsmaschine über eine Netzanpassungsschicht (NAL) mit der Funktion der Anpassung der codierten und verschlüsselten Daten an Netzbetriebsmittel und der selektiven Bereitstellung einer differenzierten Priorität und eines differenzierten Elastizitätsgrads für die codierten Bildkomponenten übertragen werden.

**6.** Verfahren gemäß Anspruch 1, **dadurch gekennzeichnet, dass** der genannte Schritt der Kantenbeschreibung umfasst:

- Empfangen des genannten Kantensatzbilds (ESI);
- Erzeugen der genannten Codierungsbitströme (EdgeC), die die Kante beschreiben;

- Erzeugen einer zusätzlichen Ausgabe, die von der ESI-Verfeinerung abgeleitet wird, die die ESI selbst oder die ESI mit einer zusätzlichen Klassifizierung der ESI-Kontur sein kann.

7. Verfahren gemäß Anspruch 1, **dadurch gekennzeichnet, dass** der genannte Schritt der Residuumbildcodierung umfasst:

- Empfangen der genannten zusätzlichen Ausgabe von dem genannten Schritt der Kantenbeschreibung und des genannten Eingangsbilds (I-I);
- Extrapolieren von Kantensatzbildinformationen (ESI-Informationen) und Erzeugen eines kantenbasierten Bilds (EBI);
- Erzeugen eines Residuums (RES) als eine "Korrektur" zu dem kantenbasierten Bild (EBI) in Bezug auf das Eingangsbild (I-I);
- Ändern des Residuums (RES) und sein Codieren, Erzeugen eines oder mehrerer Codierungsbitströme, die das Residuum beschreiben (ResC).

8. Verfahren für die kantenbasierte Bild- und Videocodierung, insbesondere für eine kantenbasierte Bild- und Videocodierung gemäß Anspruch 1, **dadurch gekennzeichnet, dass** es die folgenden Schritte umfasst:

- Empfangen von Kanteninformationen von der genannten Codierung;
- selektives Entschlüsseln des codierten kantenbasierten Bilds und Videos als eine inverse Funktion der genannten selektiven Verschlüsselung, Erhalten des genannten Codierungsbitstroms (EdgeC) und des genannten Bitstroms, der das Residuum beschreibt (ResC);
- Nehmen der genannten Codierungsbitströme (EdgeC), ihr Decodieren und Verarbeiten, um ein decodiertes Kantensatzbild (ESI') zu erzeugen;
- Nehmen des genannten decodierten Kantensatzbilds (ESI') und Erzeugen eines decodierten kantenbasierten Bilds (EBI'):
- Nehmen des genannten Bitstroms, der das Residuum beschreibt (ResC), und Aufbauen eines decodierten Residuums (RES');
- Wiederzusammensetzen des genannten decodierten Residuums (RES') und des genannten decodierten kantenbasierten Bilds (EBI) zum Erzeugen eines decodierten Bilds.

9. Verfahren gemäß dem vorhergehenden Anspruch 8, **dadurch gekennzeichnet, dass** das genannte Video- und Bildsignal eines der folgenden ist: ein Standbild oder eine Videosequenz; ein analoges oder ein digitales Signal; ein Graustufen- oder ein Farbbild wie das YUV-, das RGB-Format.

10. Vorrichtung für die kantenbasierte Bild- und Videodecodierung, insbesondere für die Implementierung des Verfahrens gemäß einem der Ansprüche 1 bis 7, wobei die Vorrichtung umfasst:

- Mittel zum Zerlegen von Video und Bildern (I-I);
- Mittel für die Kantenerfassung zum Erzeugen eines Kantensatzbilds (ESI);
- Mittel für die Kantenbeschreibung für die Graustufen/Farbdichte- und/oder Farbabtastung entlang der Kanten, um Codierungsbitströme (EdgeC) zu erzeugen, die das Kantensatzbild (ESI) beschreiben;
- Mittel für die Residuumbildextraktion als Differenz zwischen dem Originalbild (I-I) und dem kantenbasierten Bild und Codierung in Übereinstimmung mit irgendeiner Bildbeschreibungs-/ Kompressionsnorm zum Erzeugen eines oder mehrerer Codierungsbitströme, die das Residuum beschreiben (ResC);

**dadurch gekennzeichnet, dass** sie ferner eine Verschlüsselungsmaschine (EE) zur selektiven Verschlüsselung der genannten Codierungsbitströme (EdgeC) und des genannten Codierungsbitstroms, der das Residuum beschreibt (ResC), und Mittel für die Aktivierung/Deaktivierung und für die Auswahl des Typs der Verschlüsselung, die auf jede Bildkomponente angewendet wird, umfasst.

11. Vorrichtung für die kantenbasierte Bild- und Videodecodierung für die Implementierung des Verfahrens gemäß einem der Ansprüche 8 bis 9, **dadurch gekennzeichnet, dass** sie umfasst:

- Mittel zum Empfangen von Kanteninformationen von der genannten Codierung;
- Mittel für die selektive Entschlüsselung des codierten kantenbasierten Bilds und Videos als eine inverse Funktion der genannten selektiven Verschlüsselung, um die genannten Codierungsbitströme (EdgeC) und den genannten Bitstrom, der das Residuum beschreibt (ResC), zu erhalten;
- Mittel, um die genannten Codierungsbitströme (EdgeC) zu nehmen und sie zu decodieren, um ein decodiertes Kantensatzbild (ESI') zu erzeugen;
- Mittel, um das genannte decodierte Kantensatzbild (ESI') zu nehmen und ein decodiertes kantenbasiertes Bild (EBI') zu erzeugen;
- Mittel, um den genannten Bitstrom zu nehmen, der das Residuum beschreibt (ResC), und ein decodiertes Residuum (RES') aufzubauen;
- Mittel, um das genannte decodierte Residuum (RES') und das genannte decodierte kantenbasierte Bild (EBI') wieder zusammenzusetzen, um ein decodiertes Bild zu erzeugen.

12. Computerprogramm, das Computerprogrammcodemittel umfasst, die zum Ausführen aller Schritte der Ansprüche 1 bis 9, wenn das genannte Programm auf einem Computer ausgeführt wird, ausgelegt sind.

13. Computerlesbares Medium, auf dem ein Programm aufgezeichnet ist, wobei das genannte computerlesbare Medium Computerprogrammcodemittel umfasst, die dafür ausgelegt sind, alle Schritte der Ansprüche 1 bis 9 auszuführen, wenn das genannte Programm auf einem Computer ausgeführt wird.

## Revendications

1. Procédé d'encodage d'image basée sur les bords et de vidéo approprié pour un chiffrement sélectif, **caractérisé en ce qu'**il comprend une décomposition des images d'origine (I-I) selon les étapes suivantes:

   - une détection de bord, pour une régularisation, une amélioration d'agrandissement et une génération d'une image d'ensemble de bords (ESI);
   - une description de bord par un positionnement et une mise en forme de l'image d'ensemble de bords (ESI), pour un échantillonnage en teintes de gris/luminance et/ou en couleur dans l'image d'ensemble de bords (ESI), pour générer des flots de bits d'encodage (EdgeC) décrivant l'image d'ensemble de bords (ESI);
   - une extraction d'image de résidu en tant que différence entre l'image d'origine (I-I) et l'image basée sur les bords et un encodage selon n'importe quelle norme de description/compression d'image pour générer un ou plusieurs flots de bits d'encodage décrivant le résidu (ResC) ;

   **caractérisé en ce que** lesdits flots de bits d'encodage (EdgeC) et ledit flot de bits d'encodage décrivant le résidu (ResC) sont fournis à un moteur de chiffrement (EE) pour un chiffrement sélectif dans lequel le type du chiffrement appliqué à chaque composante d'image peut être activé/désactivé et sélectionné, et **en ce que** ladite description de bord comprend la détection d'un contour d'un bord (EoE) comprenant des pixels qui ont des positions contiguës et un encodage en couleur/teinte et différentiel dudit contour de la direction de bord (EoE), et **en ce qu'**un niveau robuste de chiffrement est obtenu simplement en cachant les bits de l'emplacement du point de départ ou de la direction de départ du contour.

2. Procédé selon la revendication 1, dans lequel ledit encodage différentiel est effectué au moyen d'une approche à chaîne de Markov.

3. Procédé selon la revendication 1, dans lequel le symbole '0' est communiqué à la direction la plus récente ou à la direction horizontale droite en son absence, '1' à la direction proche de la direction '0' et plus près de l'avant-dernière direction, et dans lequel les autres symboles sont donnés dans le sens inverse des aiguilles d'une montre ou dans le sens des aiguilles d'une montre, conformément aux deux premiers symboles.

4. Procédé selon l'une des revendications précédentes, **caractérisé en ce que** lesdits flots de bits d'encodage (EdgeC) décrivant le bord sont générés par les étapes suivantes:

   - une séparation bord de bord (EoE) et bord interne (IE) (EoE-IE-S) distinguant deux types d'informations à l'intérieur des zones de bord, bord de bord (EoE) et bord interne (IE), le bord de bord (EoE) étant les pixels du bord qui sont placés à la frontière entre les bords et les zones régulières; le bord interne (IE) décrivant la zone de bord qui est entourée par le bord de bord (EoE);
   - un encodage de direction de contour de bord de bord (EoE-DE) et un encodage de couleur de contour de bord de bord (EoE-CE);
   - un encodage de couleur de bord interne (IE-CE);
   - un codage d'entropie (EC), à savoir que les sorties de EOE-DE, EOE-CE, IE-CE sont compressées en utilisant une technique de codage d'entropie, et produisant lesdits flots de bits d'encodage (EdgeC) décrivant le bord.

5. Procédé selon la revendication 1, **caractérisé en ce que** les sorties du moteur de chiffrement sont transmises par une couche d'adaptation de réseau (NAL), ayant pour fonction d'adapter les données encodées et chiffrées à des ressources de réseau et de fournir de manière sélective une priorité et un degré de souplesse différenciés aux composantes d'image encodées.

6. Procédé selon la revendication 1, **caractérisé en ce que** ladite étape de description de bord consiste à:

   - recevoir ladite image d'ensemble de bords (ESI);
   - générer lesdits flots de bits d'encodage (EdgeC) décrivant le bord;
   - générer une sortie supplémentaire, déduite d'une amélioration d'ESI, qui peut être l'ESI elle-même ou l'ESI avec une classification supplémentaire de contour d'ESI.

**7.** Procédé selon la revendication 1, **caractérisé en ce que** ladite étape d'encodage d'image de résidu consiste à:

- recevoir ladite sortie supplémentaire de ladite étape de description de bord, et ladite image d'entrée (I-I) ;
- extrapoler des informations d'image d'ensemble de bords (ESI) et générer une image basée sur les bords (EBI);
- générer un résidu (RES) en tant que "correction" de l'image basée sur les bords (EBI) par rapport à l'image d'entrée (I-I);
- modifier le résidu (RES) et l'encoder, générant un ou plusieurs flots de bits d'encodage décrivant le résidu (ResC).

**8.** Procédé de décodage d'image basée sur les bords et de vidéo, en particulier pour un encodage d'image basée sur les bords et de vidéo selon la revendication 1, **caractérisé en ce qu'**il comprend les étapes consistant à:

- recevoir des informations de bord dudit encodage;
- déchiffrer de manière sélective l'image basée sur les bords et la vidéo encodées, en tant que fonction inverse dudit chiffrement sélectif, obtenant ledit flot de bits d'encodage (EdgeC) et ledit flot de bits décrivant le résidu (ResC) ;
- prendre lesdits flots de bits d'encodage (EdgeC), les décoder et les traiter pour générer une image d'ensemble de bords décodée (ESI');
- prendre ladite image d'ensemble de bords décodée (ESI') et générer une image basée sur les bords décodée (EBI');
- prendre ledit flot de bits décrivant le résidu (ResC) et construire un résidu décodé (RES');
- réassembler ledit résidu décodé (RES') et ladite image basée sur les bords décodée (EBI) pour générer une image décodée.

**9.** Procédé selon la revendication 8 précédente, **caractérisé en ce que** ledit signal de vidéo et d'image est l'un de ce qui suit: une image fixe ou une séquence vidéo; un signal analogique ou numérique; une image en teintes de gris ou en couleur, telle qu'au format YUV, RVB.

**10.** Appareil d'encodage d'image basée sur les bords et de vidéo, en particulier pour la mise en oeuvre du procédé selon l'une quelconque des revendications 1 à 7, comprenant:

- des moyens pour décomposer une vidéo et des images (I-I) ;

- des moyens pour effectuer une détection de bord, pour générer une image d'ensemble de bords (ESI);
- des moyens pour effectuer une description de bord pour un échantillonnage en teintes de gris/ luminance et/ou en couleur le long des bords pour générer des flots de bits d'encodage (EdgeC) décrivant l'image d'ensemble de bords (ESI) ;
- des moyens pour effectuer une extraction d'image de résidu en tant que différence entre l'image d'origine (I-I) et l'image basée sur les bords et un encodage selon une norme de description/compression d'image quelconque pour générer un ou plusieurs flots de bits d'encodage décrivant le résidu (ResC) ;

**caractérisé en ce qu'**il comprend en outre un moteur de chiffrement (EE) pour le chiffrement sélectif desdits flots de bits d'encodage (EdgeC) et dudit flot de bits d'encodage décrivant le résidu (ResC), et des moyens pour l'activation/désactivation et la sélection du type de chiffrement appliqué à chaque composante d'image.

**11.** Appareil de décodage d'image basée sur les bords et de vidéo pour la mise en oeuvre du procédé selon l'une quelconque des revendications 8 à 9, **caractérisé en ce qu'**il comprend:

- des moyens pour recevoir des informations de bord dudit encodage;
- des moyens pour déchiffrer de manière sélective l'image basée sur les bords et la vidéo encodées, en tant que fonction inverse dudit chiffrement sélectif, pour obtenir lesdits flots de bits d'encodage (EdgeC) et ledit flot de bits décrivant le résidu (ResC) ;
- des moyens pour prendre lesdits flots de bits d'encodage (EdgeC) et les décoder pour générer une image d'ensemble de bords décodée (ESI');
- des moyens pour prendre ladite image d'ensemble de bords décodée (ESI') et générer une image basée sur les bords décodée (EBI');
- des moyens pour prendre ledit flot de bits décrivant le résidu (ResC) et construire un résidu décodé (RES');
- des moyens pour réassembler ledit résidu décodé (RES') et ladite image basée sur les bords décodée (EBI') pour générer une image décodée.

**12.** Programme d'ordinateur comprenant des moyens formant code de programme d'ordinateur conçus pour effectuer toutes les étapes des revendications 1 à 9, lorsque ledit programme est exécuté sur un ordinateur.

**13.** Support pouvant être lu par un ordinateur sur lequel un programme est enregistré, ledit support pouvant être lu par un ordinateur comprenant des moyens formant code de programme d'ordinateur conçus pour effectuer toutes les étapes des revendications 1 à 9, lorsque ledit programme est exécuté sur un ordinateur.

**FIG. 1**

**FIG. 2**

ES-A   ES-AW

HF-EA

**FIG. 3**

**FIG. 4**

EA-N

**FIG. 5**

**FIG. 6**

EP 1 575 297 B1

| Birth | Death | Splitting | Merge |

**FIG. 7**

| Widening | Narrowing | Normal | Jump |

**FIG. 8**

**FIG. 9**

**FIG. 10**

**FIG. 11**

**FIG. 12**

**FIG. 13**

**FIG. 14-0**

**FIG. 14-1A**

**FIG. 14-1B**

**FIG. 14-2A**

**FIG. 14-2B**

**FIG. 14-2C**

**FIG. 14-3A**

**FIG. 14-3B**

**FIG. 14-4A**

**FIG. 14-4B**

**FIG. 14-4C**

**FIG. 14-5A**

**FIG. 14-5B**

**FIG. 14-6**

**FIG. 14-7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- ENCODING OF IMAGES BASED ON A TWO-COMPONENT SOURCE MODEL. **J. K. YAN et al.** IEEE TRANSACTIONS ON COMMUNICATIONS. IEEE INC, 01 November 1977, vol. 25, 1315-1322